# EUROPEAN PATENT APPLICATION

(11) **EP 4 360 781 A1**
(43) Date of publication of application: **01.05.2024**
(21) Application number: 23203314.2
(22) Date of filing: 12.10.2023
(51) Int. Cl.: B22F 10/68, B29C 64/35, B33Y 40/20, B08B 5/00, B08B 5/04, B08B 9/04, B08B 13/00

(54) **POWDER EXTRACTION TOOL**

(30) Priority: 14.10.2022 US 202263416235 P
(71) Applicant: RTX Corporation, Farmington, CT 06032 (US)
(72) Inventor: SIROIS, Dean R., Farmington, 06032 (US)
(74) Representative: Dehns

(57) **Abstract**

Disclosed herein is a powder extraction tool (202) formed within a cavity (116) of an additive manufactured component (112). The powder extraction tool (202) includes at least two tubular sections (204) having tubular walls (205) with perforations (206) and a flex joint (208) linking the at least two tubular sections (204).

## Description

### BACKGROUND

Exemplary embodiments of the present disclosure pertain to the art of additive manufacturing, and more particularly to a powder extraction tool for internal passage powder removal from an additively manufactured part.

Traditional additive manufacturing systems include, for example, Additive Layer Manufacturing (ALM) devices, such as Direct Metal Laser Sintering (DMLS), Selective Laser Melting (SLM), Laser Beam Melting (LBM) and Electron Beam Melting (EBM) that provide for the fabrication of complex metal, alloy, polymer, ceramic and composite structures by the freeform construction of the workpiece, layer-by-layer. The principle behind additive manufacturing processes involves the selective melting of atomized precursor powder beds by a directed energy source, producing the lithographic build-up of the workpiece. The melting of the powder occurs in a small localized region of the energy beam, producing small volumes of melting, called melt pools, followed by rapid solidification, allowing for very precise control of the solidification process in the layer-by-layer fabrication of the workpiece. An example of a particular type of system is a Laser Powder Bed Fusion (LPBF) additive system, where the energy beam is a laser.

The laser in a LPBF system is typically focused by a lens, then deflected by a mirror so that the energy beam selectively impinges on a powder bed. In operation, the powder is melted at the laser focus site on the build surface or substrate. Precursor powder is either gravitationally fed from cassettes or loaded by a piston so that it can be raked onto a build table. The excess powder is raked off and collected for reapplication. Additive manufacturing of parts can include complex internal passages where loose powder can be trapped during the manufacturing process. Conventional approaches to removing trapped powder include vibrating the parts and/or changing part orientation after manufacturing is complete to shake loose powder out. This approach may be less effective for more complex passage geometry.

### BRIEF DESCRIPTION

A first aspect provides a powder extraction tool formed within a cavity of an additive manufactured component. The powder extraction tool includes at least two tubular sections having tubular walls with perforations and a flex joint linking the at least two tubular sections.

In a further embodiment of the foregoing embodiment, the powder extraction tool can include a vibration source configured to induce vibration through the at least two tubular sections.

In a further embodiment of any of the foregoing embodiments, the powder extraction tool can include a pressurized air coupling attached to a first end of the at least two tubular sections and a vacuum coupling attached to a second end of the at least two tubular sections.

In a further embodiment of any of the foregoing embodiments, the powder extraction tool can include a controller configured to modulate either or both of pressurized air pumped into the pressurized air coupling and suction induced by a vacuum pump to remove powder through the vacuum coupling.

In a further embodiment of any of the foregoing embodiments, the powder extraction tool can include at least one sensor operably coupled to the controller, where the controller is configured to monitor the at least one sensor and determine when powder removal is complete.

In a further embodiment of any of the foregoing embodiments, at least one surface of the at least two tubular sections can have an auger surface to urge powder movement upon rotation of the at least one surface.

In a further embodiment of any of the foregoing embodiments, the cavity can include one or more curves within the additive manufactured component, and a plurality of tubular sections linked by flex joints are formed within the cavity to conform with a profile of curvature of the one or more curves.

In a further embodiment of any of the foregoing embodiments, at least one of the at least two tubular sections can have a different diameter than another one of the at least two tubular sections.

Another aspect provides a method for forming a powder extraction tool within a cavity of an additive manufactured component. The method includes determining a position and dimensions of the powder extraction tool to align with an interior of the cavity prior to manufacturing the cavity. The powder extraction tool is additively manufactured based on the position and dimensions as the cavity is manufactured within the additive manufactured component by forming at least two tubular sections including tubular walls with perforations, the at least two tubular sections linked by a flex joint.

In a further embodiment of the foregoing embodiment, the method can include attaching a pressurized air coupling to a first end of the at least two tubular sections and attaching a vacuum coupling to a second end of the at least two tubular sections.

In a further embodiment of any of the foregoing embodiments, the method can include placing a vibration source in contact with the powder extraction tool, where the vibration source is configured to induce vibration through the at least two tubular sections.

In a further embodiment of any of the foregoing embodiments, the method can include where at least one surface of the at least two tubular sections has an auger surface to urge powder movement upon rotation of the at least one surface.

In a further embodiment of any of the foregoing embodiments, the method can include where the cavity includes one or more curves within the additive manufactured component, and a plurality of tubular sections linked by flex joints are formed within the cavity to conform with a profile of curvature of the one or more curves.

In a further embodiment of any of the foregoing embodiments, the method can include where at least one of the at least two tubular sections has a different diameter than another one of the at least two tubular sections.

Another aspect provides a method for using a powder extraction tool within a cavity of an additive manufactured component to extract powder. The method includes attaching a pressurized air coupling to a first end of the powder extraction tool including at least two tubular sections linked by a flex joint, where the at least two tubular sections include tubular walls with perforations. A vacuum coupling is attached to a second end of the at least two tubular sections. Either or both of pressurized air pumped into the pressurized air coupling and suction induced by a vacuum pump to remove powder are modulated through the vacuum coupling.

In a further embodiment of the foregoing embodiment, the method can include controlling a vibration source to induce vibration through the at least two tubular sections.

In a further embodiment of any of the foregoing embodiments, the method can include monitoring at least one sensor to determine when powder removal is complete and stopping modulation of either or both of pressurized air pumped into the pressurized air coupling and suction induced by the vacuum pump based on determining that powder remove is complete.

In a further embodiment of any of the foregoing embodiments, at least one surface of the at least two tubular sections can have an auger surface, and the method can include rotating the at least one surface to urge powder movement.

In a further embodiment of any of the foregoing embodiments, the method can include where the cavity includes one or more curves within the additive manufactured component, and a plurality of tubular sections linked by flex joints are formed within the cavity to conform with a profile of curvature of the one or more curves.

In a further embodiment of any of the foregoing embodiments, the method can include detaching the pressurized air coupling from the first end, detaching the vacuum coupling from the second end, and extracting the powder extraction tool from the cavity.

A technical effect of the apparatus, systems and methods is achieved by performing powder extraction using a powder extraction tool as described herein.

### BRIEF DESCRIPTION OF THE DRAWINGS

The following descriptions should not be considered limiting in any way. With reference to the accompanying drawings, like elements are numbered alike:
FIG. 1 is a schematic view of an additive manufacturing system according to an embodiment;
FIG. 2 is a schematic view of a powder extraction system according to an embodiment;
FIG. 3 is a schematic view of a powder extraction tool according to an embodiment;
FIG. 4 is a schematic view of a portion of a powder extraction system according to an embodiment;
FIG. 5 is a process flow according to an embodiment; and
FIG. 6 is a process flow according to an embodiment.

### DETAILED DESCRIPTION

A detailed description of one or more embodiments of the disclosed apparatus and method are presented herein by way of exemplification and not limitation with reference to the Figures.

Additive manufacturing has resulted in parts with decreased weight, added functionality and new design possibilities. Deposition method parameters may be selected to yield a desired average grain size. The average grain size may vary by location or be consistent throughout. The thickness of a deposited layer can vary depending on the deposition method and desired average grain size.

Examples of metals that can be used in additive manufacturing include, for instance, nickel, cobalt, copper, titanium, aluminum, iron, alloys including one or more of the foregoing metals, and combinations thereof. Example alloys can include Iconel 718, Iconel 625, stainless steel, Waspaloy and IN100. Metal powder particle size and particle size distribution in powder can be determined by one of skill in the art. Other types of powder materials can also be used in additive manufacturing processes. For example, the material can be a plastic or other types of polymers.

Embodiments of the disclosure can include a powder extraction tool formed within a cavity of an additive manufactured component, as well as hardware and software that support manufacturing and powder removal after manufacturing. The powder extraction tool can support powder removal, for instance, using articulating fabricated perforated tubes allowing for blowout or suck out of loose powder. Powder that is otherwise trapped in internal cavities can be removed by making a flexible sacrificial unit as a tube structure with perforations. The tube structure can be attached to a piezo-vibration source, and a vacuum/pump system can be used to pull/push powder that is initially loosened through vibration.

The tube structure can be implemented as a flexible series of perforated tube sections. The combination of forcing compressed air in one side and vacuuming out powder of the other side of a passage can extract more powder than vibration alone. The tube structure can be printed inside of a passage or cavity of a part using the same material used to make the part. The tube sections may vary in geometry, e.g., a teardrop shape, and may not have a round cross-section depending on the geometry of the cavity in which each section is formed. As another example, the cross-section could be an ellipse or other arbitrary shape designed to align with the inner geometry of the cavity.

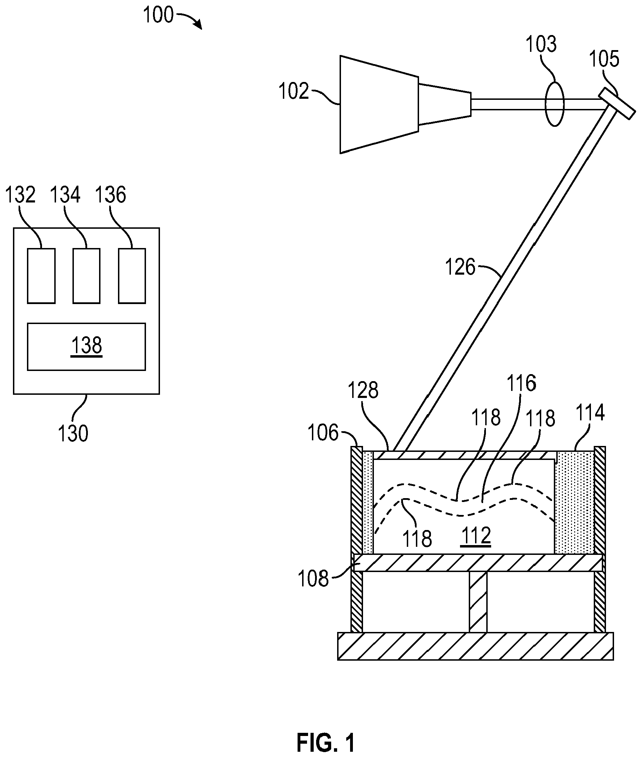

FIG. 1 shows a schematic view of an additive manufacturing system 100, which can be a laser powder bed fusion system. In the example of FIG. 1, the additive manufacturing system 100 includes an energy source 102, a lens system 103, one or more mirrors 105, and a build tank 106. The build tank 106 includes a base plate 108. The base plate 108 can be adjustable to reposition an additive manufactured component 112 as the additive manufactured component 112 is built in a powder bed 114 of the build tank 106. Alternatively, the base plate 108 and additive manufactured component 112 can remain in a fixed position. The energy source 102 can emit a laser 126 (also referred to as laser beam 126) to form a new layer 128 of material fused on an uppermost layer of the additive manufactured component 112. One or more of the mirrors 105 can be adjusted to change the target location of the laser 126. Various features can be formed within the additive manufactured component 112 as it is manufactured, such as one or more cavities 116 that may have a profile of curvature including one or more curves 118. Rather than forming the one or more cavities 116 through post-processing, the one or more cavities 116 can be formed by leaving gap space in multiple build layers. Loose powder from the powder bed 114 can be trapped within the one or more cavities 116.

The build process of the additive manufacturing system 100 can be controlled by a control system 130. The control system 130 can include a processing system 132 and a memory system 134, where the memory system 134 stores executable instructions to configure the processing system 132 to perform a plurality of operations. The processing system 132 can include any type or combination of central processing unit (CPU), including one or more of: a microprocessor, a digital signal processor (DSP), a microcontroller, an application specific integrated circuit (ASIC), a field programmable gate array (FPGA), or the like. The memory system 134 can store data and instructions that are executed by the processing system 132. In embodiments, the memory system 134 may include random access memory (RAM), read only memory (ROM), or other electronic, optical, magnetic, or any other computer readable medium onto which is stored data and algorithms in a nontransitory form. The control system 130 can also include an input/output (I/O) interface 136 operable to interface with various components of the additive manufacturing system 100 to sense, control, and communicate with components of FIG. 1 and other components, such as a user interface 138. The user interface 138 can include a display, buttons, keys, switches, and other such interfaces for accepting user input and displaying output.

It will be understood that the additive manufacturing system 100 can include other components beyond those depicted in the example of FIG. 1. Further, the additive manufacturing system 100 may support manufacturing multiple instances of the additive manufactured component 112 in parallel. Although the energy source 102 of FIG. 1 is depicted as a laser, other types of energy sources can be used in the additive manufacturing process.

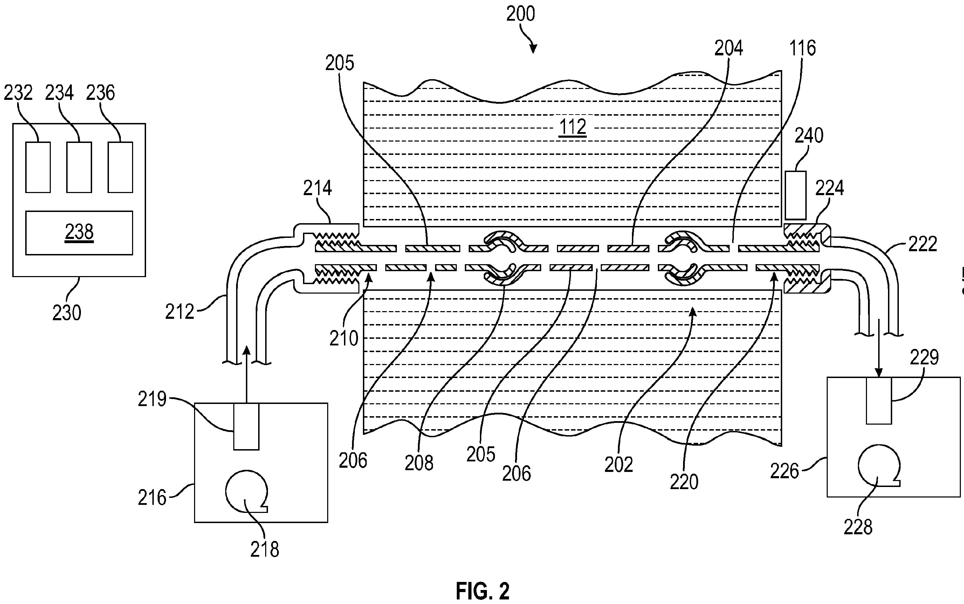

In the example of FIG. 2, a schematic view of a powder extraction system 200 is depicted. The powder extraction system 200 can be implemented as part of the additive manufacturing system 100 of FIG. 1 or as a separate system. The powder extraction system 200 includes a powder extraction tool 202 formed within a cavity 116 of an additive manufactured component 112. The powder extraction tool 202 can be additively manufactured within the cavity 116 by the additive manufacturing system 100 as the cavity 116 is formed within the additive manufactured component 112. The powder extraction tool 202 can include at least two tubular sections 204 having tubular walls 205 with perforations 206. The powder extraction tool 202 can also include a flex joint 208 linking the at least two tubular sections 204. There can be multiple flex joints 208 depending on the number of tubular sections 204 included in the powder extraction tool 202. For example, if there are N tubular sections 204, there can be N-1 flex joints 208 included in the powder extraction tool 202.

A first end 210 of a tubular section 204 of the powder extraction tool 202 can have a coupling interface, such as a threaded surface, configured to attach to a pressurized air coupling 212. The pressurized air coupling 212 can include an attachment interface 214 that is configured to engage with the coupling interface at the first end 210 of the tubular section 204, such as a threaded surface. The pressurized air coupling 212 can be attached to a pressurized air source 216 that includes a compressor 218 to output pressurized air. The pressurized air source 216 can also include a sensor 219, for instance, a pressure sensor. The sensor 219 can be included elsewhere, such as within an airpath of the pressurized air coupling 212 or at the attachment interface 214, for example.

A second end 220 of a tubular section 204 of the powder extraction tool 202 can have a coupling interface, such as a threaded surface, configured to attach to a vacuum coupling 222. The vacuum coupling 222 can include an attachment interface 224 that is configured to engage with the coupling interface at the second end 220 of the tubular section 204, such as a threaded surface. Other examples of coupling types of the attachment interfaces 214, 224 can include a force fit, a vacuum connector with a tapered fit, a compression fitting, and other such coupling interfaces. The vacuum coupling 222 can be attached to a vacuum source 226 that includes a vacuum pump 228 to create suction. The vacuum source 226 can also include a sensor 229, for instance, a pressure sensor. The sensor 229 can be included elsewhere, such as within an airpath of the vacuum coupling 222 or at the attachment interface 224, for example.

The pressurized air source 216 and/or the vacuum source 226 can be controlled by a control system 230. The control system 230 can include a processing system 232 and a memory system 234, where the memory system 234 stores executable instructions to configure the processing system 232 to perform a plurality of operations. The processing system 232 can include any type or combination of central processing unit (CPU), including one or more of: a microprocessor, a digital signal processor (DSP), a microcontroller, an application specific integrated circuit (ASIC), a field programmable gate array (FPGA), or the like. The memory system 234 can store data and instructions that are executed by the processing system 232. In embodiments, the memory system 234 may include random access memory (RAM), read only memory (ROM), or other electronic, optical, magnetic, or any other computer readable medium onto which is stored data and algorithms in a nontransitory form. The control system 230 can also include an input/output (I/O) interface 236 operable to interface with various components of the powder extraction system 200 to sense, control, and communicate with components of FIG. 2 and other components, such as a user interface 238. The user interface 238 can include a display, buttons, keys, switches, and other such interfaces for accepting user input and displaying output. In some embodiments, the control system 230 can be combined with or the same as the control system 130 of FIG. 1.

The control system 230 can interface with the sensor 219 and/or sensor 229 to monitor for changes in pressure as powder is blown/sucked out. The control system 230 can also interface with a vibration source 240 to induce vibration through at least two tubular sections 204 of the powder extraction tool 202. The vibration source 240 can induce vibration to loosen powder within the cavity 116, and an airflow generated by either or both of the compressor 218 and/or vacuum pump 228 can urge the loosened powder out of the cavity 116. The control system 230 can use a modulated control to modulate the air pressure within the cavity 116 using the pressurized air source 216 and/or the vacuum source 226. Further, the control system 230 may alternate blowing and vacuuming by pulsing air through the cavity 116. The sensors 219, 229 may be used to determine an amount of powder remaining or a remaining run time, for instance, by comparing an expected flow or mass to an observed flow or mass. In some embodiments, a sight gauge can be used to determine whether powder is still being removed. Pressure monitoring, such as detecting that vacuum pressure is not changing, can be used to determine when powder removal is likely complete.

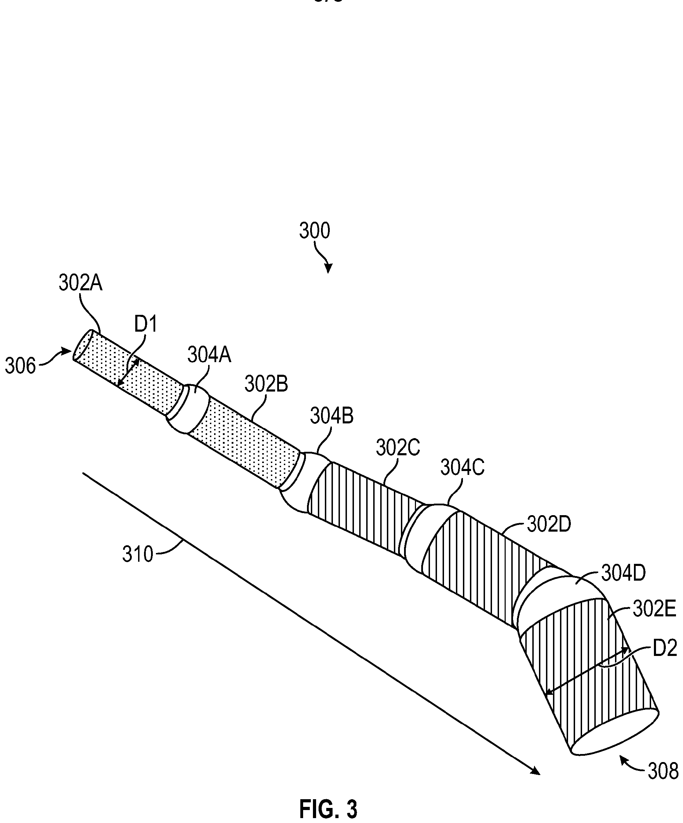

FIG. 3 is a schematic view of a powder extraction tool 300 according to an embodiment. The powder extraction tool 300 is another example of the powder extraction tool 202 of FIG. 2. The powder extraction tool 300 can include a plurality of tubular sections 302A, 302B, 302C, 302D, 302E linked by flex joints 304A, 304B, 304C, 304D. The powder extraction tool 300 can be formed (e.g., additively manufactured) within a cavity of an additive manufactured component to conform with a profile of curvature of one or more curves of the cavity, such as the curves 118 of cavity 116 of the additive manufactured component 112 of FIG. 1. The sizing of the tubular sections 302A-302E and flex joints 304A-304D can be designed to align with the profile of curvature of the cavity 116. The flex joints 304A-304D provide pivot points that allow the powder extraction tool 300 to be routed through the curves 118 and extracted. Sizing of the tubular sections 302A-302E can vary such that the tubular section 302A at a first end 306 may have a smaller diameter D1 than a diameter D2 of the tubular section 302E at a second end 308 of the powder extraction tool 300.

Although the example of FIG. 3 schematically depicts the tubular sections 302A-302E as generally cylindrical, the tubular sections 302A-302E can have a variety of shapes and may include additional features within the tubular sections 302A-302E and/or upon an external surface of the tubular sections 302A-302E. In some embodiments, one or more of the tubular sections, such as tubular sections 302C, 302D, 302E, can have an auger surface such that rotating the tubular sections 302C-302E in one direction urges powder movement. Different sections can have auger rotation in opposite directions, for instance, with a differential between sections to generally shift powder around to loosen it. The perforations in the tubular walls can provide paths for trapped powder to move. Where two or more of the tubular sections 302A-302E have a different diameter, a direction of extraction 310 of the powder extraction tool 300 can be defined from a smaller diameter section toward a larger diameter section. In some embodiments, the first end 306 and/or the second end 308 can have a coupling interface that can assist with removal of the powder extraction tool 300 from the cavity 116. For instance, the coupling interface used to connect with the attachment interfaces 214, 224 of FIG. 2 can also be used to assist in extracting the powder extraction tool 300 from the cavity 116. Other powder removal features on the tubular sections 302A-302E can include bristles to agitate and sweep loose powder within the cavity 116.

Although the example of FIG. 3 depicts five tubular sections 302A-302E connected by four flex joints 304A-304D, it will be understood that any number of tubular sections and corresponding flex joints can be implemented. Further, although the tubular sections 302A-302E are depicted as substantially cylindrical in shape, the tubular sections 302A-302E can have any shape and cross-section to fit the curvature profile of the cavity 116, such as a teardrop shape and non-circular cross-section. Additionally, the length of one or more of the tubular sections 302A-302E can vary to fit various features of the curvature profile of the cavity 116. For example, where a reduced-radius turn exists within the cavity 116, one or more of the tubular sections 302A-302E that align with or are downstream from the reduced-radius turn (e.g. a "U" or "S" turn) may have a shorter length to support articulation through the reduced-radius turn as compared to tubular sections 302A-302E upstream having a wider-radius turn profile.

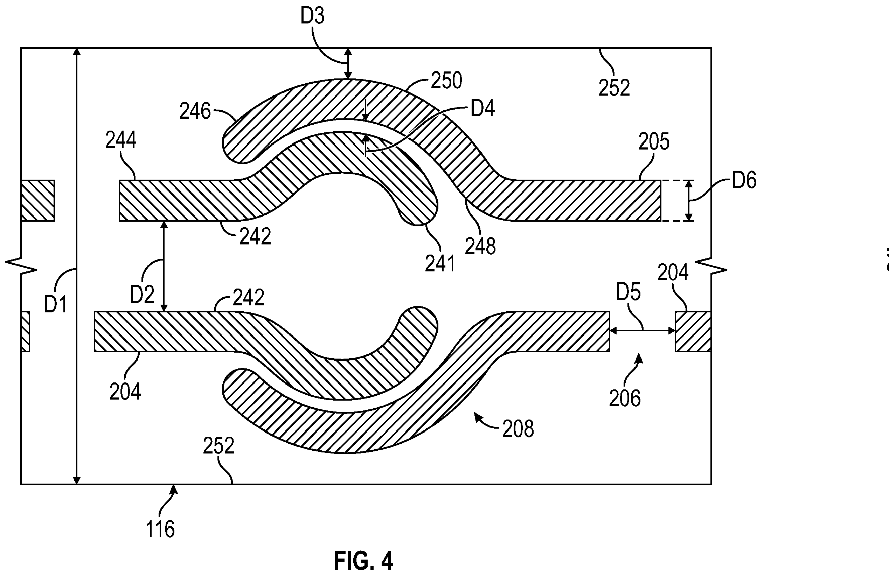

FIG. 4 depicts further details of the powder extraction tool 202 of FIG. 2 formed within cavity 116 of additive manufactured component 112 with example dimensional ranges according to an embodiment. As one example, dimensions D1, D2, D3, D4, D5, and D6 of FIG. 4 are described with respect to features of the powder extraction tool 202 of FIG. 2 and may differ from the dimensions as described with respect to the powder extraction tool 300 of FIG. 3. In the example of FIG. 4, an inner diameter dimension D1 of the cavity 116 between inner cavity walls 252 is wider than the largest diameter across an outer surface 250 of a flex joint 208 within the cavity 116 such that a clearance gap D3 exists between the outer surface 250 of flex joint 208 and the closest surface of inner cavity wall 252. As one example, clearance gap D3 can be about 40 to 80 thousandths (about 1.016 mm - 2.032 mm) to support movement of the powder extraction tool 202 through the cavity 116. An inner diameter D2 between inner walls 242 of the tubular sections 204 can be about 25% - 50% as wide as the inner diameter dimension D1 of the cavity 116. Further, to support rotation of an inner portion 241 of the flex joint 208 within an outer portion 246 of the flex joint 208, a clearance gap D4 can be formed between an outer surface 244 of the inner portion 241 of the flex joint 208 and an inner surface 248 of the outer portion 246 of the flex joint 208. As one example, clearance gap D4 can be about 15 to 30 thousandths (about 0.381 mm to 0.762 mm) to support rotation of the inner portion 241 of the flex joint 208 within the outer portion 246 of the flex joint 208. A hole diameter D5 of perforations 206 can vary in size. As one example, the hole diameter D5 can be about 20 to 50 thousandths (0.508 mm - 1.27 mm). Further, as previously noted, the hole diameter D5 need not be uniform, for instance, the perforations 206 may be canted with a funnel shape or other profile. Moreover, the hole diameter D5 can vary along the length of the powder extraction tool 202 to support suction/blowing of powder concentrated at one or more locations. As another example, a wall thickness D6 of the tubular walls 205 can be about 25 to 50 thousandths (about 0.635 mm - 1.27 mm). It will be understood that the example dimensions of FIG. 4 are for purposes of explanation and should not be construed as limiting.

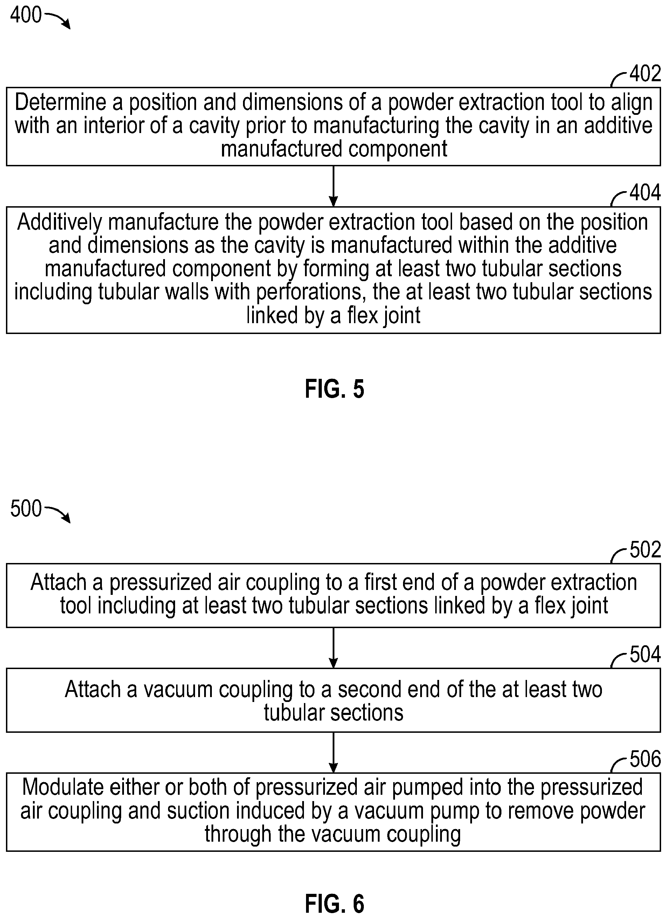

Turning to FIG. 5, a flowchart shows a method 400 for additive manufacturing according to an embodiment. The method 400 of FIG. 5 is described with respect to FIGS. 1-5 and may include additional steps beyond those depicted in FIG. 5. The method 400 can be controlled by a control system, such as the control system 130 of FIG. 1. Some portions of the method 400 can be performed manually depending on the amount of automation available. The method 400 is described primarily in reference to the additive manufacturing system 100 of FIG. 1 and the powder extraction tool 202 of FIG. 2 for purposes of explanation, although it will be understood that any of the components previously described can be used depending upon the system configuration.

At block 402, a position and dimensions of a powder extraction tool 202 can be determined to align with an interior of a cavity 116 prior to manufacturing the cavity 116 of an additive manufactured component 112. For example, one or more design files can be accessed and analyzed by the control system 130.

At block 404, the additive manufacturing system 100 can additively manufacture the powder extraction tool 202 based on the position and dimensions as the cavity 116 is manufactured within the additive manufactured component 112 by forming at least two tubular sections 204 having tubular walls 205 with perforations 206, where the at least two tubular sections 204 are linked by a flex joint 208.

After manufacturing, the powder extraction tool 202 can continue to be processed in preparation for powder removal from the cavity 116 as further described in reference to FIG. 6. Turning to FIG. 6, a flowchart shows a method 500 for powder removal in an additive manufacturing process according to an embodiment. The method 500 of FIG. 6 is described with respect to FIGS. 1-6 and may include additional steps beyond those depicted in FIG. 6. The method 500 can be controlled by a control system, such as the control system 230 of FIG. 2. Some portions of the method 500 can be performed manually depending on the amount of automation available. The method 500 is described primarily in reference to the powder extraction system 200 of FIG. 2 for purposes of explanation, although it will be understood that any of the components previously described can be used depending upon the system configuration.

At block 502, a pressurized air coupling 212 can be attached to a first end 210 of the powder extraction tool 202, where the powder extraction tool 202 includes at least two tubular sections 204 linked by a flex joint 208, and the at least two tubular sections 204 include tubular walls 205 with perforations 206.

At block 504, a vacuum coupling 222 can be attached to a second end 220 of the at least two tubular sections 204.

At block 506, either or both of pressurized air pumped into the pressurized air coupling 212 and suction induced by a vacuum pump 228 to remove powder through the vacuum coupling 222 can be modulated.

A controller, such as control system 230, can monitor at least one sensor 219, 229 to determine when powder removal is complete. The controller can stopping modulation of either or both of pressurized air pumped into the pressurized air coupling 212 and suction induced by the vacuum pump 228 based on determining that powder remove is complete.

In some embodiments, powder removal can also include controlling a vibration source 240 to induce vibration through the at least two tubular sections 204. Vibration can be induced prior to modulating airflow through the at least two tubular sections 204. Further, vibration can be induced while the airflow is modulated through the at least two tubular sections 204.

In some embodiments, at least one surface of the at least two tubular sections 204 has an auger surface (e.g., a screw-like threaded surface). Powder removal can include rotating the at least one surface to urge powder movement.

The method 500 can also include detaching the pressurized air coupling 212 from the first end 210, detaching the vacuum coupling 222 from the second end 220, and extracting the powder extraction tool 202 from the cavity 116.

In summary, embodiments allow for the removal of powder from a cavity of an additive manufactured component, where complex curvature or other geometry make powder extraction difficult. For instance, the powder extraction tool may be used where vibration and changes in component orientation may otherwise result in powder remaining trapped. The tube structure provides an airpath to force pressurize air through the cavity. Features such as an auger surface can also assist in urging powder movement for extraction. Multiple instances of the powder extraction tool can be built into multiple cavities of the same additive manufactured component.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A powder extraction tool (202; 300) formed within a cavity (116) of an additive manufactured component (112), the powder extraction tool (202; 300) comprising:
at least two tubular sections (204; 302A-E) comprising tubular walls (205) with perforations (206); and
a flex joint (208; 304A-D) linking the at least two tubular sections (204; 302A-E).

2. The powder extraction tool (202; 300) of claim 1, further comprising:
a vibration source (240) configured to induce vibration through the at least two tubular sections (204; 302A-E).

3. The powder extraction tool (202; 300) of claim 1 or 2, further comprising:
a pressurized air coupling (212) attached to a first end (210; 306) of the at least two tubular sections (204; 302A-E); and
a vacuum coupling (222) attached to a second end (220; 308) of the at least two tubular sections (204; 302A-E).

4. The powder extraction tool (202; 300) of claim 3, further comprising:
a controller (230) configured to modulate either or both of pressurized air pumped into the pressurized air coupling (212) and suction induced by a vacuum pump (228) to remove powder through the vacuum coupling (222).

5. The powder extraction tool (202; 300) of claim 4, further comprising:
at least one sensor (219, 229) operably coupled to the controller (230),
wherein the controller (230) is configured to monitor the at least one sensor (219, 229) and determine when powder removal is complete.

6. A method for forming a powder extraction tool (202; 300) within a cavity (116) of an additive manufactured component (112), the method comprising:
determining a position and dimensions of the powder extraction tool (202; 300) to align with an interior of the cavity (116) prior to manufacturing the cavity (116); and
additively manufacturing the powder extraction tool (202; 300) based on the position and dimensions as the cavity (116) is manufactured within the additive manufactured component (112) by forming at least two tubular sections (204; 302A-E) comprising tubular walls (205) with perforations (206), the at least two tubular sections (204; 302A-E) linked by a flex joint (208; 304A-D).

7. The method of claim 6, further comprising:
attaching a pressurized air coupling (212) to a first end (210; 306) of the at least two tubular sections (204; 302A-E), and attaching a vacuum coupling (222) to a second end (220; 308) of the at least two tubular sections (204; 302A-E); and/or
placing a vibration source (240) in contact with the powder extraction tool (202; 300), wherein the vibration source (240) is configured to induce vibration through the at least two tubular sections (204; 302A-E).

8. The powder extraction tool (202; 300) or method of any preceding claim, wherein at least one surface of the at least two tubular sections (204; 302A-E) has an auger surface to urge powder movement upon rotation of the at least one surface.

9. The powder extraction tool (202; 300) or method of any preceding claim, wherein the cavity (116) comprises one or more curves (118) within the additive manufactured component (112), and a plurality of tubular sections (204; 302A-E) linked by flex joints (208; 304A-D) are formed within the cavity (116) to conform with a profile of curvature of the one or more curves (118).

10. The powder extraction tool (202; 300) or method of any preceding claim, wherein at least one of the at least two tubular sections (204; 302A-E) has a different diameter than another one of the at least two tubular sections (204; 302A-E).

11. A method for using a powder extraction tool (202; 300) within a cavity (116) of an additive manufactured component (112) to extract powder, the method comprising:
attaching a pressurized air coupling (212) to a first end (210; 306) of the powder extraction tool (202; 300) comprising at least two tubular sections (204; 302A-E) linked by a flex joint (208; 304A-D), wherein the at least two tubular sections (204; 302A-E) comprise tubular walls (205) with perforations (206);
attaching a vacuum coupling (222) to a second end (220; 308) of the at least two tubular sections (204; 302A-E); and
modulating either or both of pressurized air pumped into the pressurized air coupling (212) and suction induced by a vacuum pump (228) to remove powder through the vacuum coupling (222).

12. The method of claim 11, further comprising:
controlling a vibration source (240) to induce vibration through the at least two tubular sections (204; 302A-E).

13. The method of claim 11 or 12, further comprising:
monitoring at least one sensor (219, 229) to determine when powder removal is complete; and
stopping modulation of either or both of pressurized air pumped into the pressurized air coupling (212) and suction induced by the vacuum pump (228) based on determining that powder removal is complete.

14. The method of claim 11, 12 or 13, wherein:
at least one surface of the at least two tubular sections (204; 302A-E) has an auger surface, and the method further comprises rotating the at least one surface to urge powder movement; and/or
the cavity (116) comprises one or more curves (118) within the additive manufactured component (112), and a plurality of tubular sections (204; 302A-E) linked by flex joints (208; 304A-D) are formed within the cavity (116) to conform with a profile of curvature of the one or more curves (118).

15. The method of any of claims 11 to 14, further comprising:
detaching the pressurized air coupling (212) from the first end (210; 306);
detaching the vacuum coupling (222) from the second end (220; 308); and
extracting the powder extraction tool (202; 300) from the cavity (116).
